Europäisches Patentamt

European Patent Office

Office européen des brevets

(11) Veröffentlichungsnummer: **0 272 363**
**A2**

# (12) EUROPÄISCHE PATENTANMELDUNG

(21) Anmeldenummer: 87104263.6

(22) Anmeldetag: 23.03.87

(51) Int. Cl.4: **F16K 49/00** , F16K 27/08

(30) Priorität: 24.12.86 DE 8634606 U
02.03.87 DE 8703184 U

(43) Veröffentlichungstag der Anmeldung:
29.06.88 Patentblatt 88/26

(84) Benannte Vertragsstaaten:
AT BE CH DE ES FR GB GR IT LI LU NL SE

(71) Anmelder: Kuhlmann, Günter
Südstrasse 31
D-4795 Delbrück(DE)

(72) Erfinder: Ross, Elmar
Auf den Heimerswiesen 21
D-6450 Hanau(DE)

(74) Vertreter: Hanewinkel, Lorenz, Dipl.-Phys.
Patentanwalt Ferrariweg 17a
D-4790 Paderborn(DE)

(54) Isolierbox für Absperr- und Regelarmaturen.

(57) Die Isolierbox für Absperr-und Regelarmaturen
(1) setzt sich aus zwei Hälften (2), aus je einer
Außen-und Innenschale (3, 4) und dazwischenliegendem Isoliermaterial (5) zusammen.

Die Außen-und Innenschale (3, 4) jeder Hälfte
(2) besteht aus einem einteilig geblasenen
Hohlkörper mit hautförmiger Wandung aus Kunststoff und dieser Hohlkörper ist mit Isoliermaterial (5)
ausgefüllt, vorzugsweise ausgeschäumt.

Beide Hälften (2) sind identisch ausgebildet und
weisen symmetrisch-spiegelbildlich angeordnete und
zusammenfügbare Formteile (6 bis 13) auf.

Durch die identische Ausbildung beider Hälften
(2) wird nur ein Hälftentyp für die Isolierbox benötigt
und somit ist die Hälfte (2) in einem einzigen Formwerkzeug kostengünstig herstellbar.

Fig.1

EP 0 272 363 A2

## Isolierbox für Absperr-und Regelarmaturen

Die Erfindung bezieht sich auf eine Isolierbox für Absperr-und Regelarmaturen, bestehend aus zwei Hälften, aus je einer Außen-und Innenschale und dazwischenliegendem Isoliermaterial.

Bei derartigen bekannten Isolierboxen bestehen die Außen-und Innenschalen aus Metall, wodurch in ungünstiger Weise eine verhältnismäßig hohe Wärmeleitfähigkeit vorhanden ist, die trotz des in den Schalen eingebrachten Isoliermaterials eine unzureichende Isolierwirkung ergibt. Außerdem sind die beiden Hälften der Isolierbox formenmäßig unterschiedlich, so daß zwei Formwerkzeuge für die Herstellung der Hälften notwendig sind, was sich kostenmäßig nachteilig auswirkt.

Weiterhin ist die Verbindung der beiden Hälften verhältnismäßig aufwendig durch zusätzliche Haltemittel.

Aufgabe der Erfindung ist es, eine nach der eingangs genannten Art aufgebaute Isolierbox dahingehend zu verbessern, daß sie durch besondere Formgebung ihrer Hälften in einem einzigen Formwekzeug einfach und kostengünstig herstellbar ist, beide Hälften leicht und sicher lösbar zusammenfügbar sind und die gesamte Box einen hohen Isolierwirkungsgrad hat.

Diese Aufgabe wird erfindungsgemäß durch die kennzeichnenden Merkmale des Schutzanspruches 1 gelöst, wobei noch die in den einzelnen Unteransprüchen aufgeführten Gestaltungsmerkmale vorteilhafte Weiterbildungen der Aufgabenlösung darstellen.

Der Gegenstand der Erfindung erstreckt sich nicht nur auf die Merkmale der einzelnen Ansprüche, sondern auch auf dere Kombination.

Die erfindungsgemäße Isolierbox besteht aus zwei miteinander lösbar verbundenen Hälften, jedoch wird durch besondere Formgebung dieser Hälften nur ein Hälftentyp benötigt und somit ist jede Hälfte in einem einzigen Formwerkzeug kostengünstig herstellbar. Die Hälfte setzt sich aus einer im Blasverfahren hergestellten, einteiligen Außenhaut als Hohlkörper zusammen, der mit einem geeigneten Isoliermaterial ausgefüllt, vorzugsweise ausgeschäumt ist. Die Außenhaut besteht ebenfalls aus Kunststoff, so daß zusammen mit dem eingebrachten Isoliermaterial die Isolierbox einen sehr hohen Isolierwirkungsgrad ergibt.

In die Hälfte und an der Hälfte sind Lagefixiermittel. Aufnahmeöffnungen für Armaturteile und Verbindungsmittel für die beiden Hälften einstückig ein-und angeformt und die beiden Hälften werden - scharnierartig und/oder durch Klammern einfach und sicher lösbar zusammengehalten.

Weiterhin ist die Hälfte mit An-und Ausformungen versehen, die ein Eindringen von Schwitzwasser in den Anschlußrohrbereich der Armatur verhindern und ein Herausfließen des Schwitzwassers aus der Isolierbox zulassen.

Anhand der Zeichnungen werden nachfolgend Ausführungsbeispiele der Erfindung näher erläutert. Es zeigt:

Fig. 1 einen Längsschnitt gemäß Schnittlinie I-I in Fig. 2 durch eine aus zwei Hälften bestehende und eine Absperr-und Regelarmatur aufnehmende Isolierbox;

Fig. 2 eine Draufsicht auf eine Hälfte der Isolierbox;;

Fig. 3 eine Vorderansicht einer Hälfte der Isolierbox in weiterer Ausführung;

Fig. 4 einen Querschnitt durch die Hälfte nach Fig. 3 gemäß Schnittlinie II-II in Fig. 5;

Fig. 5 eine Draufsicht auf dieselbe Hälfte;

Fig. 6 Querschnitte von Einzelheiten V bis der an bis 10 und in der Hälfte vorgesehenen Formteile.

Die Isolierbox für Absperr-und Regelarmaturen (1) besteht aus zwei Hälften (2) aus je einer Außen-und Innenschale (3, 4) und dazwischenliegendem Isoliermaterial (5).

Erfindungsgemäß ist dabei die Außen-und Innenschale (3, 4) von einem einteilig geblasenen Hohlkörper mit hautförmiger Wandung aus Kunststoff gebildet und dieser Hohlkörper mit Isoliermaterial (5) ausgefüllt, vorzugsweise ausgeschäumt.

Die Außen-und Innenschale (3,4) bildet somit eine einteilige, hautförmige Wandung, die eine geschlossenporige oder teilweise offenporige Oberfläche hat und aus verschiedenen Kunststoff geblasen werden kann. Als Isoliermaterial(5) wird in bevorzugter Weise Polyurethanschaum verwendet.

Weiterhin sind die beiden Hälften (2) erfindungsgemäß identisch ausgebildet und weisen symmetrisch-spiegelbildlich angeordnete und zusammenfügbare Formteile (6 bis 14) auf, wobei diese Formteile (6 bis 14) herstellungsmäßig an und in die hautförmige Wandung (3, 4) der Hälfte (2) geformt sind.

Die an-und eingeformten Formteile (6 bis 14) werden nachfolgend in ihrer speziellen Ausführung und Benutzung beschrieben.

Die Trennebene der Isolierbox, d.h., der beiden Hälften (2), stellt die Verbindungsfläche (15) für die beiden Hälften (2) dar. In diese Verbindungsfläche (15) ist eine Aufnahmemulde (6) für die Armatur (1) eingeformt um die die Verbindungsfläche (15) U-förmig umläuft. Von der Aufnahmemulde (6) aus gehen drei in die Verbindungsfläche (15) eingeformte, im Querschnitt halbkreisförmige Aufnahmeöffnungen (7,8)(Aufnahmerinnen) für Anschlußrohre (16) und ein Betätigungsteil (17) der Armatur (1) nach außen ab, wobei die Rohr-Aufnahmeöffnungen (7) sich koaxial gegenüberliegen und die Betätigungsteil-Öffnung (8) winklig, vorzugsweise rechtwinklig, dazu verläuft.

Die beiden Hälften (2) werden durch an und in ihrer Verbindungsfläche (15) an-und eingeformte Nut-Federteile (10 bis 12) gegeneinander lagefixiert und durch an der Hälften-Außenfläche angeformte, scharnierartig und/oder durch Klammern (18) verbindbare Vorsprünge (13, 14) lösbar zusammengehalten.

Auf einer Seite der Symmetrieachse (19) der Hälfte (2) ist in der U-förmigen Verbindungsfläche (15) eine winkelförmige Nut (9) und im Abstand dazu eine langlochförmige Nut (10) eingeformt und auf der anderen Seite der Symmetrieachse (19) ist eine winkelförmige Feder (11) und eine langlochförmige Feder (12) erhaben angeformt.

Beiderseits der Symmetrieachse (19) liegt zwischen den winkel-und langlochförmigen Formteilen (9 bis 12) jeweils eine Aufnahmeöffnung (7) für die Anschlußrohre (16) der Armatur (1) auf der Symmetrieachse (19) erstreckt sich zwischen den langlochförmigen Formteilen (10, 12) die dritte Aufnahmeöffnung (8) für das Betätigungsteil (17).

In den Aufnahmeöffnungen (7, 8) sind eingeformte Fixiernuten (20) für Isolierteile der Anschlußrohre (16) und für ein die Längenänderung des von einer handradbetätigten Gewindespindel gebildeten Betätigungsteiles (17) ausgleichenden Faltenbalg (21) vorgesehen.

An dem sich an die Aufnahmemulde (6) anschließenden Rand der Aufnahmeöffnungen (7) - schließt sich jeweils eine in die Aufnahmemulde (6) hineinragende, umlaufende Wulst (22) angeformt an.

Die nut-und federartigen Formteile (9 bis 12) und die Fixiernuten (20) sind mit Entformungsschrägen und/oder -rundungen (23) ausgestattet.

Die langlochförmige Nut (10) und/oder Feder (12) bildet eine Einfüllöffnung für das Isoliermaterial (5), welches in den Hohlkörper eingeschäumt wird und nach dem Ausschäumen des Hohlkörpers verschließt das Isoliermaterial (5) diese Einfüllöffnung.

Zwischen den langlochförmigen Formteilen (10, 12) und der Aufnahmeöffnung (8) ist je ein von der Aufnahmemulde (6) nach außen verlaufender Kanal (24) eingeformt, durch den sich eventuell innerhalb der Isolierbox bildendes Schwitzwasser oder sonstige Feuchtigkeit zwischen den beiden Hälften (2) nach außen herausfließen kann. Die Wülste (22) der Anschlußrohr-Aufnahmeöffnungen (7) verhindern ein Eindringen dieses Schwitzwasser in die Aufnahmeöffnungen (7).

An dem der Aufnahmeöffnung (8) gegenüberliegenden Rand der Verbindungsfläche (15) ist beiderseits der Symmetrieachse (19) und an den beiden Seitenrändern der Hälfte (2) ist neben der Aufnahmeöffnung (7) je ein im Querschnitt hinterschnittener, stegartiger Vorsprung (13, 14) angeformt und die beiden mit ihren Verbindungsflächen (15) aneinanderliegenden und mit den Nut-Feder-Formteilen (9 bis 12) lagefixiert ineinandergreifenden Hälften (2) werden durch auf die deckungsgleich aneinanderliegenden Vorsprünge (13, 14) aufgesteckten bzw. aufgeschobenen Klammern (18) lösbar zusammengehalten. Bei dieser Verbindung sind die in jeder Hälfte (2) vorgesehenen halben Aufnahmeöffnungen (7, 8) zu zylindrischen Aufnahmeöffnungen zusammengefügt.

An Stelle der Vorsprünge (13) können auch ineinanderrastbare und zusammenwirkende Scharnierteile angeformt sein, so daß die beiden Hälften (2) an der der Öffnung (8) gegenüberliegenden Seite klappbar miteinander verbunden sind und dann durch die Klammern (18) auf den Vorpsrüngen (14) zusammengehalten werden.

Um die Anschlußrohre (16) der Armatur (1) wird jeweils ein in die Fixiernuten (20) einfassendes Isolierteil eingesetzt, was gleichzeitig zur Abdichtung dient. Der Faltenbalg (21) besitzt einen Bund (21a), mit dem er in der Fixiernut (20) gehalten ist. An dem Bund (21a) ist ein in die Aufnahmemulde (6) eingreifendes Isolierteil (25) befestigt, so daß auch im Bereich des Faltenbalges (21) und um das Betätigungsteil (17) eine Isolierung und Abdichtung vorhanden ist.

Der Bund (21a) mit Isolierteil (25) ist somit feststehend in der Isolierbox gehalten und beim Längenverschieben des Betätigungsteiles (17) bewegt sich der Faltenbalg (21) mit.

Die Hälfte (2) der Isolierbox hat die Form einer Halbschale mit an einer Schalenseite quer zur Symmetrieachse (19) verlaufenden Abflachung (26), aus der die Aufnahmeöffnung (8) austritt.

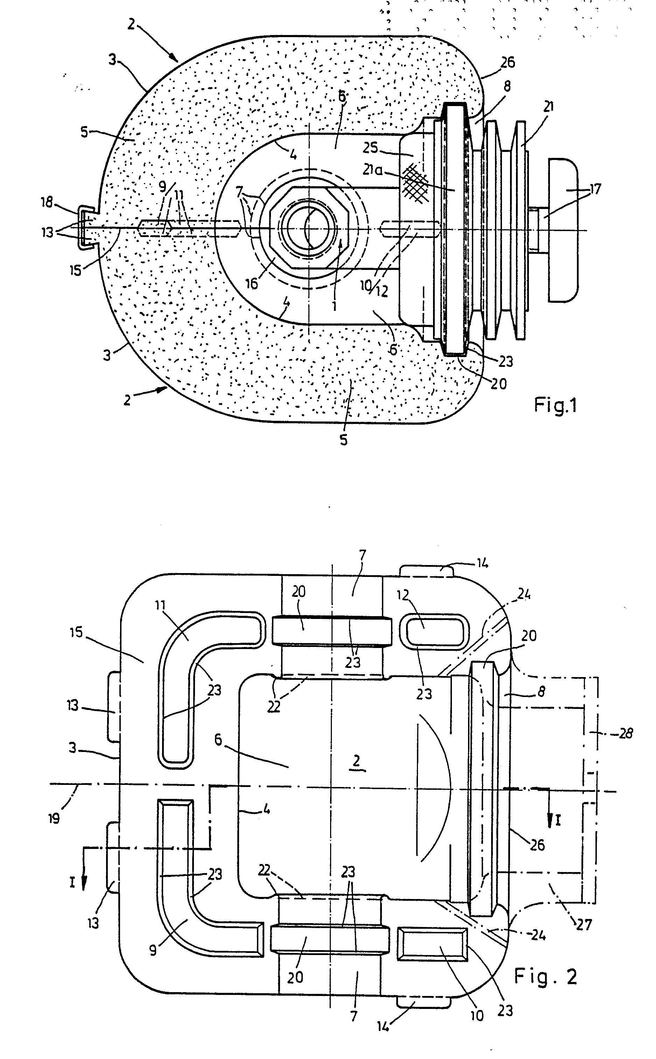

An Stelle des Einsatzes eines Faltenbalges (21) kann an die Hälfte (2) im Bereich der Abflachung (26) ein im Querschnitt halber und auf der Symmetrieachse (19) liegender Rohrstutzen (27) (vgl. strich-punktierte Darstellung in Fig. 2) angeformt sein, aus dem dann das Betätigungsteil (17) herausragt und der durch ein geeignetes Isolierteil (28) verschlossen ist, der das Betätigungsteil (17) umfaßt und feststehend oder die Längenbewegung des Betätigungsteiles (17) mit durchführend am Stutzen (27) gehalten ist.

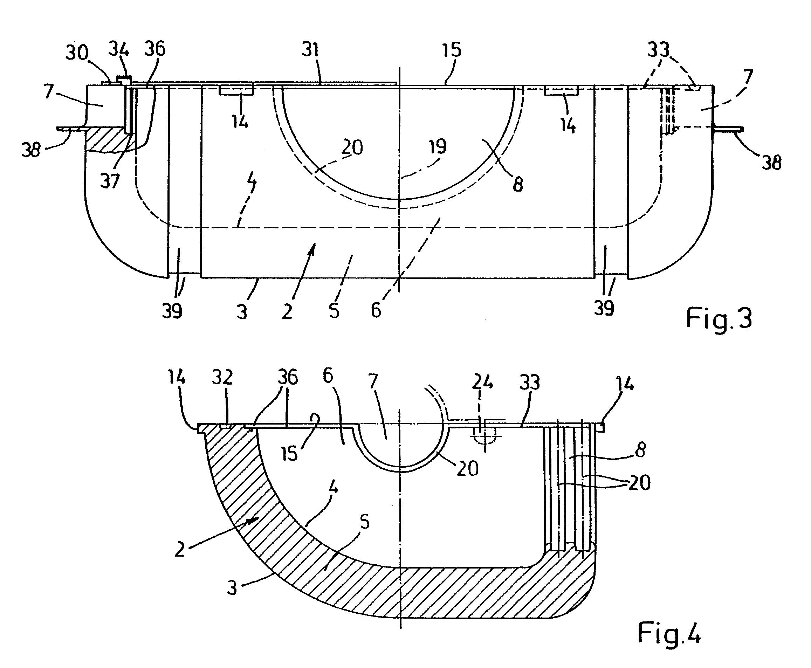

Die Isolierbox setzt sich aus zwei Hälften zusammen, die jedoch identisch ausgebildet sind und somit ist für die Herstellung der Hälften (2) nur eine einzige Form erforderlich. Die beiden Hälften (2) werden dann spiegelbildlich um ihre Symmetrieachse (19) um 180° geklappt zusammengesetzt. Die weitere Ausführung einer Isolierbox-Hälfte (2) nach den Fig. 3 bis 10 entspricht im Grundprizip der Hälfte (2) nach Fig. 1 und 2 und für gleiche Teile sind dieselben Bezugszahlen verwendet worden.

Diese Hälfte (2) hat eine rechteckige Schalen-Grundform (ist in der Aufsicht auf die Verbindungsfläche (15) rechteckig mit abgerundeten Ecken ausgeführt) und die Symmetrieachse (19) verläuft rechtwinklig zur größeren Rechteckausdehnung der Grundform. Auf dieser Symmetrieachse (19) liegt die Aufnahmeöffnung, wodurch die Verbindungsfläche (15) eine C-Form erhalten hat.

In einer Rechteck-Längsseite der Hälfte (2) ist die Aufnahmeöffnung (8) für das Betätigungsteil der Armatur (1) und in den beiden sich gegenüberliegenden kürzeren Rechteckseiten ist je eine Aufnahmeöffnung (7) für die Anschlußrohre (16) eingeformt.

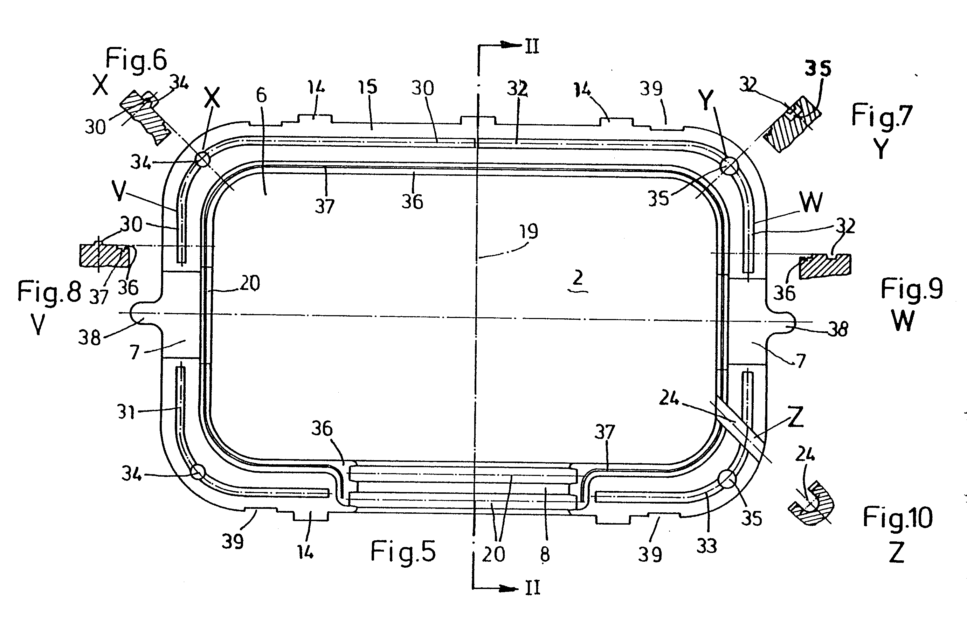

Die Verbindungsfläche (15) zeigt auf einer Seite (in Fig. 5 auf der linken Seite) eine von der Symmetrieachse (19) aus bis zur Aufnahmeöffnung (7) und von dieser Aufnahmeöffnung (7) bis zur Aufnahmeöffnung (8) verlaufende, erhaben angeformte Feder (30, 31), die einen trapezförmigen Querschnitt hat (vergl. Einzelheit V gemäß Fig. 8), und jeweils mit geringem Abstand vor der Aufnahmeöffnung (7,8) endet.

Auf der anderen Seite (in Fig. 5 auf der rechten Seite) ist in die Verbindungsfläche (15) eine von der Symmetrieachse (19) bis zu der Aufnahmeöffnung (7) und von dieser bis zur Aufnahmeöffnung (8) verlaufende Nut (32, 33) mit trapezförmigem Querschnitt (vergl. Einzelheit W gemäß Fig. 9) eingeformt, wobei diese beiden Nuten (32, 33) ebenfalls jeweils mit geringem Abstand zu der Aufnahmeöffnung (7, 8) enden.

Die beiden Federn (30, 31) und die beiden Nuten (32, 33) haben jeweils einen Winkelverlauf, wobei die beiden Federn (30, 31) zusammen, und die beiden Nuten (32, 33) zusammen eine C-Form ergeben. Beide C-Formen sind identisch, so daß zwei gleiche Hälften (2) bei Wendung um 180° um ihre Symmetrieachse (19) zu der Box zusammensetzbar sind.

In dem Bogenbereich jeder Feder (30, 31) und Nut (32, 33) ist ein Fixierpunkt vorgesehen, der bei den Federn (30, 31) von einem Nocken (34) und bei den Nuten (32, 33) von einem Sackloch (35) gebildet ist (vergl. Einzelheit X gemäß Fig. 6 und Y gemäß Fig. 7). Die beiden Nocken (34) jeder Hälfte 2 greifen beim Verbinden mit der anderen Hälfte 2 formschlüssig in die Sacklöcher (35) ein und stellen eine zusätzliche Fixierung der Hälften gegeneinander dar und können Einfüllöffnungen für das Isoliermaterial (5) bilden. Die Nocken (34) und Sacklöcher (35) sind im Querschnitt kreisförmig und in Längsrichtung zylindrisch mit Einführfase oder konisch ausgeführt.

In die Verbindungsfläche (15) ist eine sich an die Innenschale (4) anschließende Stufe (36) eingeformt, die einen Teilbereich des Abstandes zwischen Innenschale (4) und Feder (30, 31) sowei Nur (32, 33) einnimmt und um die Aufnahmemulde (6) umläuft. In diese Stufe (36) ist eine ebenfalls umlaufende Nut (37) eingeformt. Stufe (36) und Nut (37) laufen auch in den beiden Öffnungen (7) um, enden jedoch an der Öffnung (8). Die Stufe (36) und Nut (37) dienen zur Aufnahme von Dichtungen.

(24) stellt den eingeformten Kanal zum Abfluß des Schwitzwassers dar, der direkt als Ablauf dienen kann, oder in den ein Ablaufschlauch eingelegt wird.

An den längeren Rechteckseiten der Hälfte (2) sind jeweils mehrere Vorsprünge (14) für die Klammerverbindung (14, 18) zweier Hälften (2) angeformt und an jede rinnenförmige Aufnahmeöffnung (7) schließt sich im tiefsten Rinnenpunkt eine nachaußen gerichtete Lasche (38) an, die zur Vorfixierung zweiter Hälften (2) um die Anschlußrohre (16) mittels eines Bandes od. dgl. vor der Klammerbefestigung auf den Vorsrüngen (14) dient.

Weiterhin hat die Hälfte (2) zwei sich über die gesamte Außenfläche erstreckende, parallel zur Symmetrieachse (19) verlaufende Nuten (39), in die wahlweise ein beide Hälften (29) umschlingendes Spannband zur Hälftenverbindung eingelegt werden kann.

## Ansprüche

1. Isolierbox für Absperr-und Regelarmaturen, bestehend aus zwei Hälften, aus je einer Außen- und Innenschale und dazwischenliegendem Isoliermaterial, dadurch gekennzeichnet, daß die Außen- und Innenschale (3,4) jeder Hälfte (2) von einem einteilig geblasenen Hohlkörper mit hautförmiger Wandung aus Kunststoff besteht und dieser Hohlkörper mit Isoliermaterial (5) ausgefüllt, vorzugsweise ausgeschäumt ist.

2. Isolierbox nach Anspruch 1, dadurch gekennzeichnet, daß beide Hälften (2) identisch ausgebildet sind und symmetrisch-spiegelbildlich angeordnete und zusammenfügbare Formteile (6 bis 14/ 30 bis 39) aufweisen.

3. Isolierbox nach den Ansprüchen 1 und 2, da durch gekennzeichnet, daß die Formteile (6 bis 14/30 bis 39) herstellungsmäßig an und in die hautförmige Wandung (3, 4) der Hälfte (2 geformt sind.

4. Isolierbox nach den Ansprüchen 1 bis 3, dadurch gekennzeichnet, daß in die Hälfte (2) von der die Trennebene der Isolierbox bildenden Verbindungsfläche (15) aus eine Aufnahmemulde (6) für die Armatur (1) eingeform ist, um die die Verbindungsfläche (15) U-förmig oder C-förmig umläuft und von der aus drei eingeformte, im Querschnitt halbkreisförmige Aufnahmeöffnungen (7, 8) für Anschlußrohre (16) und ein Betätigungsteil (17) der Armatur (1) nach außen abgeben, wobei die Anschlußrohröffnungen (7) sich koaxial gegenüberliegen und die Betätigungsteilöffnung (8) winklig, vor zugsweise rechtwinklig, dazu verläuft.

5. Isolierbox nach den Ansprüchen 1 bis 4, dadurch gekennzeichnet, daß die beiden Hälften (2) durch an und in ihrer Verbindungsfläche (15) an-und eingeformte Nut-Federteile (9 bis 12/30 bis 35) gegeneinanderlagefixiert und durch an der Hälften-Außenkante angeformte, scharnierartig und/oder durch Klammern verbindbare Vorsprünge (13, 14) lösbar zusammengehalten sind.

6. Isolierbox nach Anspruch 5, dadurch gekennzeichnet, daß auf einer Seite der Symmetrieachse (19) in der U-förmigen Verbindungsfläche (15) eine winkelförmige Nut (9) und im Abstand dazu eine langlochförmige Nut (10) eingeformt und auf der anderen Seite der Symmetrieachse (19) eine winkelförmige Feder (11) und eine langlochförmige Feder (12) erhaben angeformt sind.

7. Isolierbox nach den Ansprüchen 4 und 6, dadurch gekennzeichnet, daß beiderseits der Symmetrieachse (19) zwischen den winkel-und langlochförmigen Formteilen (9, 10 bzw. 11, 12) jeweils eine Aufnahmeöffnung (7) für die Anschlußrohre (10) der Armatur (1) rechtwinklig zur Symmetrieachse (19) verlaufend und auf der Symmetrieachse 19 zwischen den Langlochförmigen Formteilen ( 10, 12) die dritte Aufnahmeöffnung (8) eingeformt sind.

8. Isolierbox nach Anspruch 4, dadurch gekennzeichnet, daß in den Aufnahmeöffnungen (7, 8) Fixiernuten (20) für Isolierteile der Anschlußrohre (16) und für ein die Ländenänderung des Betätigungsteiles (17) ausgleichenden Faltenbalg (21) eingeformt sind.

9. Isolierbox nach Anspruch 4, dadurch gekennzeichnet, daß an dem sich an die Aufnahmemulde (6) anschließenden Rand der Aufnahmeöffnungen (7) eine in die Aufnahmemulde (6) hineinragende, umlaufende Wulst (22) angeformt ist.

10. Isolierbox nach den Ansprüchen 6 und 8, dadurch gekennzeichnet, daß die nut-und federartigen Formteile (9 bis 12) und die Fixiernuten (20) mit Entformungsschrägen und/oder -abrundungen (23) versehen sind.

11. Isolierbox nach Anspruch 6, dadurch gekennzeichnet, daß die langlochförmige Nut (10) und/oder die erhabene Feder (12) eine Einfüllöffnung für das Isoliermaterial (5), vorzugsweise Polyurethanschaum, bildet.

12. Isolierbox nach den Ansprüchen 1 bis 11, dadurch gekennzeichnet, daß zwischen den langlochförmigen Formteilen (10, 12) und der ringnenförmigen Aufnahmeöffnung (8) je ein von der Aufnahmemulde (6) nach außen verlaufender Kanal (24) in die Verbindungsfläche (15) eingeformt ist.

13. Isolierbox nach Anspruch 5, dadurch gekennzeichnet, daß an dem der Aufnahmeöffnung (8) gegenüberliegendem Rand der Hälfte (2) beiderseits der Symmetrieachse (19) und an den beiden Seitenrändern neben den Aufnahmeöffnungen (7) und im Bereich der langlochförmigen Formteile (10, 12) je ein im Querschnitt hinterschnittener, stegartiger Vorsprung (13, 14) angeformt ist und beide Hälften (2) durch auf die aneinanderliegenden Vorsprünge (13, 14) aufgesteckte bzw. aufgeschobene Klammern (18) lösbar zusammengehalten sind.

14. Isolierbox nach Anspruch 5, dadurch gekennzeichnet, daß an dem der Aufnahmeöffnung (8) gegenüberliegenden Rand der Hälfte (2) beiderseits der Symmetrieachse (19) je ein - scharnierartiges Verbindungsteil angeformt ist, durch die die beiden Hälften (2) klappbar miteinander verbunden sind.

15. Isolierbox nach den Ansprüchen 1 bis 14, dadurch gekennzeichnet, daß die Hälfte (2) die Form einer Halbschale mit an einer Schalenseite quer zur Symmetrieachse (19) verlaufenden Abflachung (26) hat, aus der die auf der Symmetrieachse (19) verlaufende Aufnahmeöffnung (8) austritt.

16. Isolierbox nach den Ansprüchen 1 bis 14, dadurch gekennzeichnet, daß die Hälfte (2) in Form einer Halbschalge mit an einer Schalenseite quer zu Symmetrieachse (19) verlaufenden Abflachung (26) hat, an die ein im Querschnitt halber, auf der Symmetrieachse (19) liegender Rohrstutzen (27) angeformt ist.

17. Isolierbox nach den Ansprüchen 1 bis 5, dadurch gekennzeichnet, daß die Hälfte (2) eine rechteckige, eckseitig abgerundete Grundform mit quer zur längeren Rechteckseite verlaufender Symmetrieachse (19) und auf der Symmetrieachse (19) in einer längeren Rechteckseite eingeformte, der Hälfte (2) eine C-förmige Verbindungsfläche (15) gebende Betätigungsteil-Aufnahmeöffnung (8) und in den beiden hinteren Rechteckseiten eingeformte Anschlußrohr-Aufnahmeöff-nungen (7) hat.

18. Isolierbox nach Anspruch 17, dadurch gekennzeichnet, daß auf einer Seite der Symmetrieachse (19) auf der Verbindungsfläche (15) zwei winkelförmig verlaufende Federn (30, 31) mit in den Bogenbereichen liegenden Nocken (34) und auf der anderen Seite der Verbindungsfläche (15) zwei winkelförmig verlaufende Nuten (32, 33) mit in den Bogenbereichen liegenden Sacklöchern (35) an-und eingeformt sind.

19. Isolierbox nach den Ansprüchen 17 und 18, dadurch gekennzeichnet, daß in der Verbindungsfläche (15) im muldenseitigen Randbereich eine bis auf die Betätigungsteil-Aufnahmeöffnung (8) umlaufende Stufe (36) mit umlaufender Nut (37) eingeformt ist.

20. Isolierbox nach den Ansprüchen 17 bis 19, dadurch gekennzeichnet, daß an der Außenseite der Hälfte (2) im Bereich der Aufnahmeöffnungen (7) jeweils eine Lasche (38) angeformt ist.

21. Isolierbox nach den Ansprüchen 17 bis 20, dadurch gekennzeichnet, daß in einem Eckbereich der Hälfte (2) ein Schwitzwasser-Ablaufkanal (24) in der Verbindungsfläche (15) eingeformt ist.

22. Isolierbox nach den Ansprüchen 17 bis 20, dadurch gekennzeichnet, daß in der Außenschale (3) beiderseits der Symmetrieachse (19) eine bis auf die Verbindungsfläche (15) umlaufende Nut (39) eingeformt ist.

Fig.1

Fig. 2

Fig.5, Fig.6, Fig.7, Fig.8, Fig.9, Fig.10